# EUROPEAN PATENT SPECIFICATION

(11) **EP 1 693 995 B1**
(45) Date of publication and mention of the grant of the patent: **13.03.2013**
(21) Application number: 05754893.5
(22) Date of filing: 20.06.2005
(51) Int. Cl.: H04W 12/06, H04L 29/06

(54) **A METHOD FOR IMPLEMENTING ACCESS AUTHENTICATION OF WLAN USER**
VERFAHREN ZUM IMPLEMENTIEREN DER ZUGANGSAUTHENTIFIKATION EINES WLAN-BENUTZERS
PROCÉDÉ D'APPLICATION D'UNE AUTHENTIFICATION D'ACCÈS D'UN UTILISATEUR WLAN

(30) Priority: 24.06.2004 CN 200410049141
(43) Date of publication of application: 23.08.2006
(73) Proprietor: Huawei Technologies Co., Ltd., Longgang District, Shenzhen Guangdong 518129 (CN)
(72) Inventor: ZHANG, Wenlin, District, Shenzhen, Guangdong 518129 (CN)
(74) Representative: Isarpatent
(86) International application number: PCT/CN2005/000880
(87) International publication number: WO 2006/000149

(56) References cited:
- EP-A- 1 357 720
- WO-A1-03/096628
- WO-A1-2004/045224
- 3GPP: "3GPP TS 23.234 V6.1.0 (2004-06) - 3rd Generation Partnership Project; Technical Specification Group Services and System Aspects; 3GPP system to Wireless Local Area Network (WLAN) interworking; System description (Release 6)" 3GPP TECHNICAL SPECIFICATION, [Online] 22 June 2004 (2004-06-22), XP002489367 Retrieved from the Internet: URL:http://www.3gpp.org/ftp/Specs/archive/ 23_series/23.234/23234-610.zip> [retrieved on 2008-07-23]
- 3GPP: "3GPP TS 33.234 V6.1.0 (2004-06) - 3rd Generation Partnership Project; Technical Specification Group Service and System Aspects; 3G Security; Wireless Local Area Network (WLAN) interworking security (Release 6)" 3GPP TECHNICAL SPECIFICATION, [Online] 15 June 2004 (2004-06-15), XP002489368 Retrieved from the Internet: URL:http://www.3gpp.org/ftp/Specs/archive/ 33_series/33.234/33234-610.zip> [retrieved on 2008-07-23]

## Description

### Field of the Technology

The present invention relates to authentication technique in Wireless Local Area Network (WLAN). More particularly, the present invention relates to a method for preventing a WLAN user from being authenticated by a plurality of Authentication Authorization Accounting (AAA) servers.

### Background of the Invention

At users' demand for an increasingly high rate of wireless access, there emerges the WLAN, which is able to provide high-rate wireless data access in a relatively small area. Various techniques have been used in WLAN, among which a technical standard with more applications is IEEE 802.11b. This standard involves the frequency band of 2.4GHz with a data transmission rate up to 11 Mbps. Other technical standards involving the same frequency band include IEEE 802.11 g and the Bluetooth, where the data transmission rate of IEEE 802.11g is up to 54Mbps. There are other new standards such as IEEE 802.11 a and ETSI BRAN Hiperlan2 which use the frequency band of 5GHz with the transmission rate up to 54 Mbps as well.

Although there are various techniques for wireless access, most WLANs are utilized to transfer IP data packets. The specific WLAN access technique adopted by a wireless IP network is usually transparent to the upper level IP. Such a network is usually configured with Access Points for implementing wireless access of a user terminal and with controlling and connecting devices for implementing IP transmission.

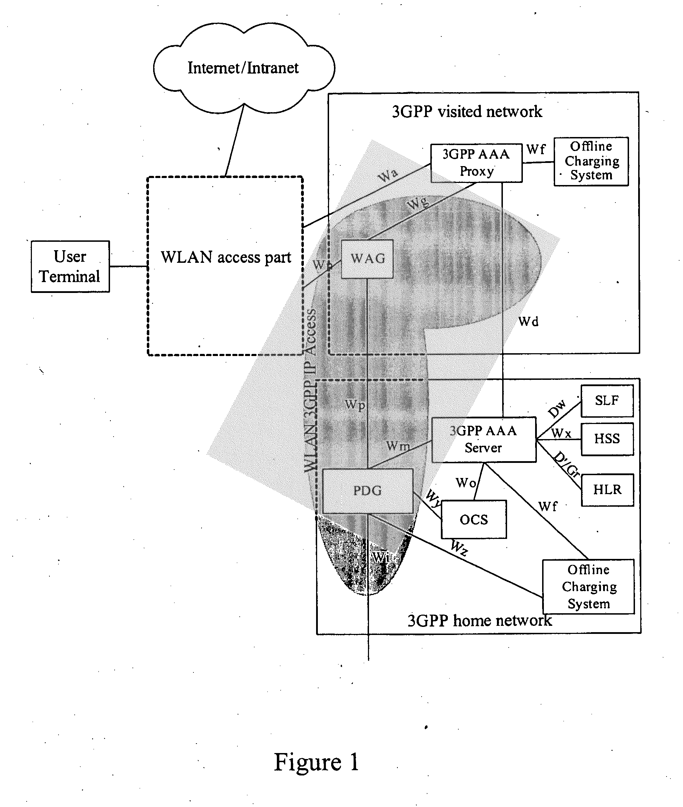

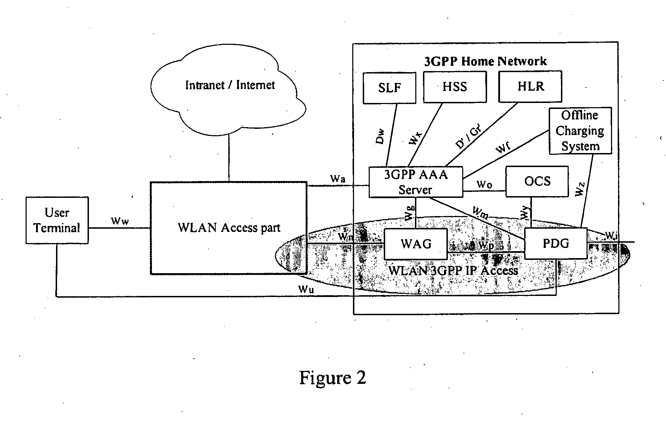

Along with the rising and developing of WLAN, focus of research is shifting to the inter-working of WLAN among various wireless mobile communications networks, such as GSM, CDMA, WCDMA, TD-SCDMA, and CDMA2000. In accordance with the 3GPP standards, a user terminal is able to connect to Internet and Intranet via the WLAN access network and also connect to the home network and visited network of a 3GPP system via the WLAN access network. To be specific, when accessing locally, a WLAN user terminal, like WLAN user equipment (UE), will get connected to the 3GPP home network via the WLAN access network, as shown in Figure 2; when roaming, it will get connected to the 3GPP visited network via the WLAN access network. Some entities of the 3GPP visited network are connected with corresponding entities of the 3GPP home network, for instance, the 3GPP Authentication, Authorization, Accounting (AAA) proxy in the visited network is connected with the 3GPP AAA server in the home network, the WLAN Access Gateway (WAG) in the visited network is connected with the Packet Data Gateway (PDG) in the home network, as shown in Figure 1. Figure1 and Figure 2 are the schematic diagrams illustrating the networking architectures of a WLAN inter-working with a 3GPP system with and without roaming, respectively.

As shown in Figure 1 and Figure 2, a 3GPP system primarily comprises Home Subscriber Server (HSS)/ Home Location Register (HLR), 3GPP AAA server, 3GPP AAA proxy, WAG, PDG, Offline Charging System and Online Charging System (OCS). WLAN user terminals, WLAN access network, and all the entities of the 3GPP system together constitute a 3GPP-WLAN inter-working network, which can be used as a WLAN service system. In this service system, 3GPP AAA server is in charge of the authentication, authorization, and accounting of a user, collecting the charging information sent from the WLAN access network and transferring the information to the charging system; PDG is in charge of the transmission of the user's data from the WLAN access network to the 3GPP network or other packet networks; and the charging system receives and records the users' charging information transferred from the network. OCS instructs the network transmit the online charging information periodically in accordance with the expense state of the online charged users and makes statistics and conducts control.

Under the non-roaming condition, when a WLAN user terminal desires to access directly to the Internet/Intranet, the WLAN user terminal can access to Internet/Intranet via WLAN access network after it passes authentication and authorization of AAA server (AS) via WLAN access network. Should the WLAN user terminal desire to access to the service of 3GPP packet switching (PS) domain as well, it may further request the service of Scenario 3 from the 3GPP home network. That is, the WLAN user terminal initiates a authorization request for the service of Scenario 3 to the AS of the 3GPP home network, which will carry out service authentication and authorization for that request; if it succeeds, AS will send an access accept message to the WLAN user terminal and assign a corresponding PDG for the WLAN user terminal. When a tunnel is established between the WLAN user terminal and the assigned PDG, the WLAN user terminal will be able to access to the service of the 3GPP PS domain. Meanwhile, the offline charging system and OCS records the charging information in accordance with the WLAN user terminal's use state of the network.

Under the roaming condition, when a WLAN user terminal desires to access directly to the Internet/Intranet, it may make a request to the 3GPP home network by way of the 3GPP visited network for access to the Internet/Intranet. Should the WLAN user terminal also desire to request the service of Scenario 3 to access to the service of the 3GPP PS domain, the WLAN user terminal needs to initiate via the 3GPP visited network a service authorization procedure at the 3GPP home network. The authorization is carried out likewise between the WLAN user terminal and AS of the 3GPP home network. After the authorization succeeds, AS assigns the corresponding home PDG for the WLAN user terminal, then the WLAN user terminal will be able to access to the service of 3GPP PS domain of the home network after it establishes a tunnel with the assigned PDG via the WAG of the 3GPP visited network.

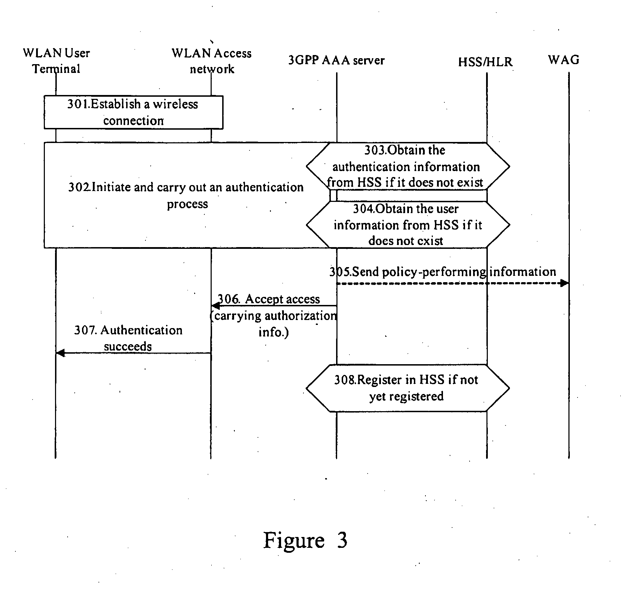

In accordance with the provision of the 3GPP protocol, in the existing 3GPP-WLAN inter-working network, the authentication and authorization procedure for a WLAN user is shown as Figure 3, comprising the steps of:

Steps 301-302: The current WLAN user terminal establishes a wireless connection with the WLAN access network in line with the procedures as defined in the 3GPP protocol. Then an authentication procedure between the WLAN user terminal and the 3GPP AAA server is initiated. The authentication is carried out by means of the Extendable Access Protocol (EAP), that is, messages of EAP request and EAP acknowledgement are interchanged between the current WLAN user terminal and the 3GPP AAA server.

Steps 303~304: After receiving the authentication request, the 3GPP AAA server verifies whether there exists in itself the authentication information in connection with the current WLAN user terminal, if not exist, obtain from HSS the authentication information of the current WLAN user terminal, for instance, the authentication triplets/quintets. Moreover, if there is no user subscription information of the current WLAN user terminal in the 3GPP AAA server, such as authorization information and temporary user identity, it has to be obtained from HSS as well. In other words, if there is no user information in the 3GPP AAA server itself, the information has to be obtained from HSS.

Step 305: The 3GPP AAA server may send the policy enforcement information to the WAG of the Visited Public Land Mobile Network (VPLMN) in which the current WLAN user terminal is roaming. This step is optional.

Step 306: If the authentication and authorization succeed, the 3GPP AAA server will send to the WLAN access network the message of Access Accept, which includes the message of EAP Success. This EAP success message carries the authorization information, such as access filtering rules, tunnel attributes, and etc.

Step 307: After receiving the message of Access Accept, WLAN access network sends the message of EAP Success to the current WLAN user terminal.

Step 308: If the current WLAN user terminal does not have in the HSS the registration information of the 3GPP AAA server currently authenticating the WLAN user, register in the HSS the 3GPP AAA server currently authenticating the WLAN user. The WLAN user is identified in accordance with the provisional identity of user in the registration message.

However, when there is more than one AAA server in the home network providing services and if a user has been connected to one of the servers, how can it be guaranteed to connect the user to the same AAA server next time the user initiates an authentication procedure? It can be seen from the above procedures that, if there is not yet a solution to this issue contained in the present standards and processes, when there is more than one AAA server which can provide services for WLAN users in a Home Public Land Mobile Network (HPLMN), it is possible for a WLAN user terminal to be connected with AAA Server 2 after it is connected with AAA Server 1 when first accessing. In this case, AAA Server 2 will make interaction with HSS again to request the user subscription information from HSS, leading to scattered user data which can not be managed in a centralized way.

In "3GPP TS 23.234 V6.1.0-3rd Generation Partnership Project; Technical Specification Group Services and System Aspects; 3GPP system to Wireless Local Area Network (WLAN) interworking; System description (Release 6)", it relates to how the 3GPP AAA Server obtains available authentication vector to perform authentication.

Although at present a solution is proposed in this field to allow a plurality of AAA servers to provide services at the same time, the specific implementation of the solution requires multiple decisions made by HSS, and the procedure is rather complicated and increases the load of HSS to a certain degree.

### Summery of the Invention

The present invention provides an authentication method in WLAN, which is able to prevent the same WLAN user from being access authenticated by a plurality of AAA servers, thereby avoiding scattered user data and ensuring a simple, convenient, and flexible authentication.

The technical solution in accordance with the present invention is as follows.

When an AAA server, which received an authentication request from a WLAN user terminal, sends a user information request to a home user information server, an authentication method for use in WLAN comprises the steps of:
a. having received the user information request, the home user information server verifies whether there is an existing AAA server registered to serve the WLAN user terminal, if not exist, returns user data of the WLAN user terminal to the AAA server requesting user information; if exist, executes step b;
b. the home user information server selects one AAA server to authenticate the WLAN user terminal.

The step b comprises: the home user information server verifies whether the AAA server registered to serve the WLAN user terminal is the AAA server requesting user information, if yes, selects the AAA server requesting user information to authenticate the WLAN user terminal; otherwise, the home user information server selects one AAA server to authenticate the WLAN user terminal.

The procedure of the home user information server selecting one AAA server comprises:
the home user information server provides the AAA server requesting WLAN user information with the address of the AAA server registered to serve the WLAN user terminal;
the AAA server requesting user information forwards the authentication request to the AAA server registered to serve the WLAN user terminal, and the AAA server registered to serve the WLAN user terminal authenticates the WLAN user terminal.

In the above solution, the procedure of the home user information server selecting one AAA server comprises: the home user information server returns the user data of the WLAN user terminal to the AAA server requesting user information, and the AAA server requesting user information authenticates the WLAN user terminal.

The method further comprises before step b: the home user information server makes periodical contacts with or negotiates with the AAA server registered to serve the WLAN user terminal before returning the address of the AAA server registered to serve the WLAN user terminal to the AAA server requesting user information.

In the above solution, the procedure of the AAA server registered to serve the WLAN user terminal authenticating the WLAN user terminal further comprises: the AAA server requesting user information, as a proxy or a relay device, forwards all the signaling between the WLAN user terminal and the AAA server registered to serve the WLAN user terminal.

In the above solution, the AAA server requesting user information receives from a downstream node thereof the authentication request of the WLAN user terminal; the procedure of the AAA server registered to serve the WLAN user terminal authenticating the WLAN user terminal further comprises: the AAA server requesting user information transfers the address of the AAA server registered to serve the WLAN user terminal to the downstream node; the downstream node sends the authentication request to the AAA server registered to serve the WLAN user terminal.

In the above solution, the home user information server selects the AAA server requesting the user information to authenticate the WLAN user terminal; the step b further comprises: after the authentication succeeding, the selected AAA server requests for registration at the home user information server; the home user information server indicates the AAA server registered to serve the WLAN user terminal to delete the relevant information of the WLAN user terminal, deletes from itself the registration information of the AAA server registered to serve the WLAN user terminal, and registers the information of the selected AAA server.

In the above solution, the user information comprises at least one of the subscription information of the WLAN user terminal and the authentication information of the WLAN user terminal.

In the above solution, the home user information server is one of a home subscriber server (HSS) and the combination of a home location register (HLR) and an authentication center (AuC).

The user information request is one of an authentication request or an authorization request.

The user data comprise at least one of authentication information and authorization information.

The downstream node is one of an AAA proxy and a WLAN AN.

According to an embodiment, a home user information server is provided, including means adapted to
receive user information request from an AAA server,
decide whether there is an existing AAA server registered to serve a WLAN user terminal corresponding to the user information request;
return user data of the WLAN user terminal to the AAA server requesting user information if there is no existing AAA server registered; and
select one AAA server to authenticate the WLAN user terminal if there is the existing AAA server registered.

In the authentication method provided by the present invention, if HSS finds that the current WLAN user terminal is requesting authentication to a different AAA server, HSS will select one AAA server to provide service for the current WLAN user and delete the relevant data in other AAA servers as well as the connection thereof with the WLAN. Accordingly, it is ensured that only one AAA server makes authentication to each WLAN user, thereby preventing scattered user data and guaranteeing a centralized management of the data.

In accordance with the method of this invention, for the purpose of determining if the current WLAN user terminal is engaged with different AAA servers it is only needed to decide whether the registration of the same user comes from different AAA servers. Therefore, it is simple and convenient, neither bringing further load to HSS nor making the authentication procedure more complicated. In addition, since this invention proposes different approaches to achieve the purpose of preventing one WLAN user terminal from being access authenticated by a plurality of AAA servers, the implementation is more flexible.

### Brief Description of the Drawings:

Figure 1 is a schematic diagram illustrating the network architecture of inter-working between WLAN system and 3GPP system.
Figure 2 is a schematic diagram illustrating a networking structure of an operating WLAN.
Figure 3 is the flowchart in the prior art of authenticating and authorizing a WLAN user.
Figure 4 is the flowchart of one embodiment of this invention.
Figure 5 is the flowchart of another embodiment of this invention.
Figure 6 is the flowchart of WLAN authentication applied to EAP-AKA in accordance with this invention.
Figure 7 is the flowchart of WLAN authentication applied to EAP-SIM in accordance with this invention.

### Detailed Description of Preferred Embodiments:

The core idea of this invention is as follows: When the AAA server which has received an authentication request from a WLAN user terminal requests the home user information server for the user information, if the home user information server determines in accordance with the registered AAA identification that the current WLAN user terminal is requesting for authentication by a different AAA server, the home user information server will select one AAA server to authenticate the current WLAN user and, at the same time, delete the registration data of the other AAA servers in the user information server itself as well as the connections thereof with the WLAN. Accordingly, it is ensured that only one AAA server authenticates each WLAN user terminal.

The home user information server mentioned here may be HSS or a combination of HLR and other network entities such as Authentication Center (AuC). The following description, however, will be given by using HSS, for example, as the home user information server. That only one AAA server provides service for each WLAN user terminal does not mean that only one designated AAA server is used. In other words, that HSS selects one AAA server to authenticate the current WLAN user terminal means that it may select either the old AAA server or a new AAA server.

HSS will carry out different processing depending on the different AAA server it has currently selected. Suppose that the old AAA server is AAA1 and the new AAA server is AAA2. If a WLAN user has accessed via AAA1, such user's data as the subscription information and access state will have been stored in AAA1, and AAA1 will have registered in HSS, indicating that AAA1 has authenticated that WLAN user. Then, if the WLAN user is accessing via AAA2, HSS can determine that the WLAN user is trying to access via a new AAA server, AAA2, according to the registered AAA-ID. In this case, if AAA2 is a lawful AAA server in accordance with the configuring rule of HSS, there are two processes that HSS will typically follow:

The first process: if HSS selects AAA1 to perform the authentication, it will send the address of AAA1 to AAA2, and AAA2 will make the signaling forwarded to AAA1 through a forwarding mechanism. The forwarding here mentioned can be implemented by optional means, such as relay, proxy, or redirection.

In this process, as there may appear the situation when AAA1 fails or loses contact with HSS, it is needed for HSS to cancel the registration of AAA1 timely and actively so as to ensure that AAA2 can normally perform the authentication via AAA1. Therefore, it is required that HSS learns the failures or overloading of AAA devices timely. For this purpose, HSS will make periodical contacts with AAA1, or negotiates with AAA1 before forwarding the signaling; if the negotiation fails or there is no response, it is believed that AAA1 is in trouble and HSS will cancel the registration of AAA1 in time, get directly connected with AAA2, and send the data to AAA2. The data mentioned here refer to the user's subscription information, the authentication triplets/quintets for security authentication, and etc.

The second process: If HSS selects AAA2 to perform the authentication, HSS will send all the relevant data to AAA2, and instruct AAA2 to register in the HSS itself after AAA2 is successful in performing the authentication; meanwhile, HSS will delete the registration of AAA1 and give instruction to remove the relevant connections between AAA1 and the WLAN. The relevant data mentioned here refer to the user's subscription information, the authentication triplets/quintets for security authentication, and etc. The relevant connections comprise session connections in an AAA server, or lower-layer physical connections and session connections in an AAA server.

The solution described above is primarily applicable to the situation where there exist pluralities of AAA servers in a network which can provide services for WLAN user terminals. The network here mentioned may be HPLMN, VPLMN, or WLAN. In fact, the process described in the above solution is the process of determining whether the AAA server which has received an authentication request from a WLAN user will be the AAA server or the AAA proxy for this authentication.

### Embodiment 1:

This embodiment is based on the flowchart shown in Figure 3 and combines the interactive procedure shown in Figure 3 with the processing steps in line with the core idea of this invention, which mainly involves changes in steps 303 and 304 and keeps other steps remain basically the same. The specific modification is as follows:

Add in step 303 the judgment by HSS on the AAA server which currently requests for the user's information. After receiving the request for subscription information sent by the AAA server, HSS will check whether there is the AAA registration of the WLAN user in itself. If not, proceed with the normal steps; if yes, decide according to the AAA identification whether the registered AAA server is the same as the AAA server currently sending the request. If they are the same, proceed with the normal steps; if they are not the same but HSS selects the AAA server currently sending the request, proceed with the normal steps as well, and it is only needed to add a step of deleting the information and connections of the registered AAA server related with the current WLAN user to step 308 or after step 308.

If they are not the same AAA server and HSS selects the registered AAA server, HSS will return the address of the registered AAA server to the AAA server currently sending the request, which will forward the authentication request to the registered AAA server. Step 303 and subsequent steps will then be performed by the registered AAA server.

### Embodiment 2:

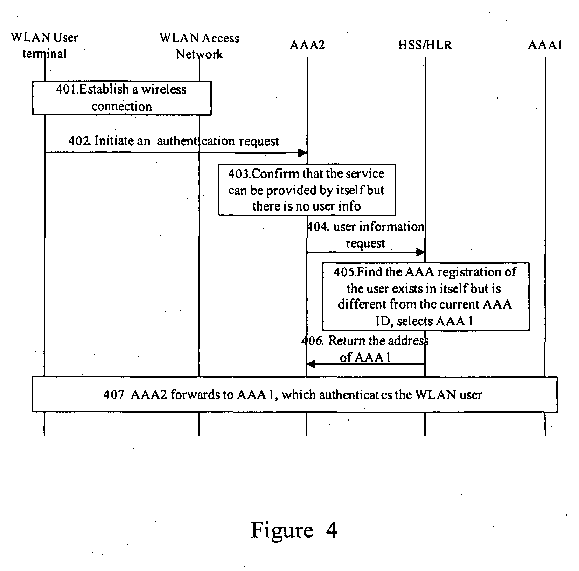

In this embodiment, the home AAA (H-AAA) server of a WLAN user terminal receives an authentication request sent from its downstream node, which refers herein to an AAA proxy/relay proxy. This downstream node is located in HPLMN, VPLMN, or WLAN. Suppose that H-AAA is AAA2, the AAA server which has registered in HSS is AAA1, and HSS selects AAA1 to perform the authentication, the procedure for authenticating the WLAN user in this embodiment is shown as Figure 4, comprising the steps of:

Steps 401-402: After a WLAN user terminal currently requesting to access the network establishes a wireless connection with the WLAN access network, AAA2 receives an authentication request sent by the WLAN user terminal via the downstream node.

Steps 403-404: AAA2 determines that it is able to provide service for the user based on the configuring information in itself but finds that there is no user information of the WLAN user terminal in itself, so it initiates a user information request to HSS for the user's data. The user information request, in actual operation, may be an authentication information request, or a subscription information request, or a combination of the two. The configuring information mentioned here refers to the conditions and parameters configured in advance. For instance, there are 200 users with the user numbers from 1 to 200 and 3 AAA servers in a network and it is pre-configured that AAA1 provides service for users with the user numbers of 1 - 100, AAA2 provides service for users of No. 50 - No. 180, and AAA3 provides service for users of No. 181 ~ No. 200. Then there would be two AAA servers able to provide service for users of No. 50 ~ No. 100.

Steps 405~406: After receiving the subscription information request from AAA2, HSS checks whether there is the AAA registration of the WLAN user terminal in itself and finds that there has existed the registration of AAA1. HSS also decides according to the AAA identification that AAA1 is not the same AAA as the current AAA2 and selects AAA1, so HSS will refuse to provide AAA2 with the user's data and will send the address of the registered AAA1 to AAA2.

To ensure that AAA1 is in a normal state of operation, HSS may make periodical contacts with AAA1 or negotiate with AAA1 in advance before sending the address of AAA1 to AAA2 so as to confirm that AAA1 operates normally and users' data are in normal storage and state, which means primarily that no users' data are lost while users' states may be attach or detach.

Step 407: AAA2 forwards the authentication request signaling to AAA1 according to the received address thereof, and AAA1 performs the subsequent steps of authentication. The specific forwarding of the signaling can be implemented by means of the following mechanism:
1) AAA2, as proxy or a relay device, forwards all the signaling in the authentication interaction between the downstream node and AAA1 so as to accomplish the interaction of AAA signaling between the current WLAN user terminal and AAA1. For instance, AAA2 can be used as DIAMETER-PROXY AGENT or DIAMETER-RELAY AGENT in the DIAMETER protocol and interaction can be carried out in line with the method provided in the IETF draft <draft-ietf-aaa-diameter-17>.
2) AAA2, as a transfer proxy, notifies the downstream node that the end of the authentication interaction needs to be switched to AAA1. The downstream node then will no longer send the authentication interactive signaling to AAA2. If the downstream node in this case is a proxy or broker, that downstream node will re-initiate the signaling to AAA1 according to the received notification and stops interaction with AAA2. For instance, AAA2 can be used as DIAMETER-PROXY REDIRECT AGENT of the DIAMETER protocol and carries out interaction according to the method provided by the IETF specification.

### Embodiment 3:

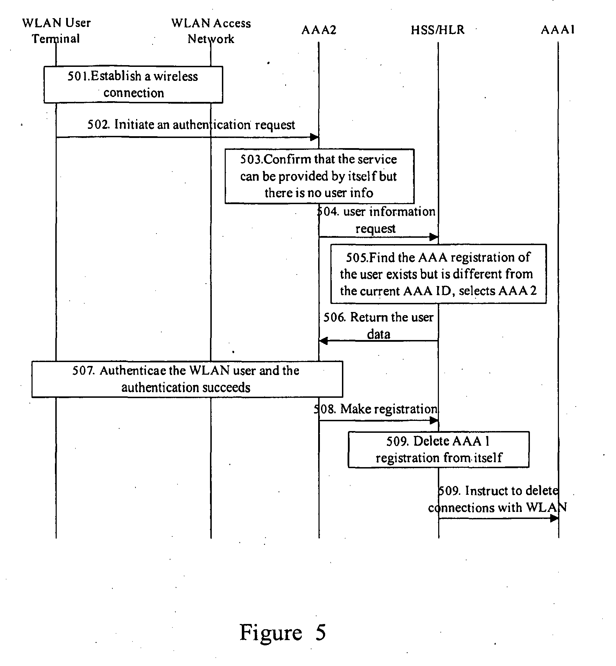

In this embodiment, suppose that the AAA server currently receiving an authentication request is AAA2, the AAA server already registered in HSS is AAA1, and HSS selects AAA2 to perform the authentication, then the procedure for authenticating the WLAN user in this embodiment is shown in Figure 5, comprising the steps of:
Steps 501~504: Basically the same as all the description in Embodiment 1.
Steps 505-506: After receiving the subscription information request from AAA2, HSS checks whether there is the AAA registration of the WLAN user terminal in itself and finds that there has existed the registration of AAA1. HSS also decides according to the AAA identification that AAA1 is not the same AAA as the current AAA2 and selects AAA2, so HSS will provide AAA2 with the user's data.
Steps 507-509: After receiving the user's data, AAA2 authenticates the current WLAN user and registers at HSS after the authentication succeeds. HSS records the information of AAA2, including the identification of AAA2, and, at the same time, deletes the existing registration information of AAA1 and instructs AAA1 to delete the relevant connections created between AAA1 and the WLAN.

### Embodiment 4:

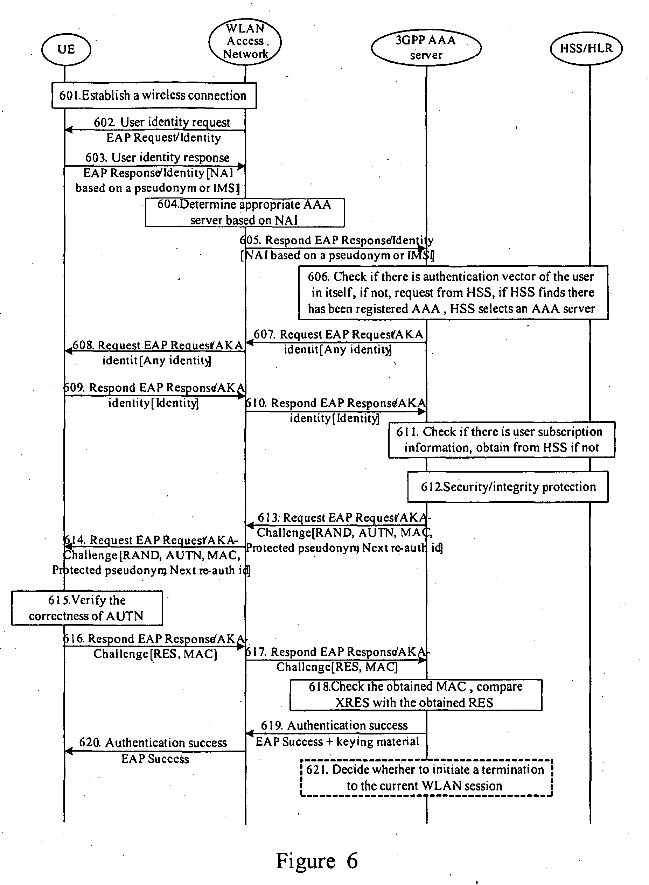

This embodiment is the application of this invented method in the WLAN authentication procedure of EAP-AKA. The primary procedure of EAP-AKA authentication is prescribed in detail in the specification. This embodiment mainly gives a description of how it is ensured that only one AAA server is used to provide service for a user when the procedure of EAP-AKA authentication is performed in a WLAN-3GPP inter-working network. As shown in Figure 6, the method embodied in this example comprises the steps of:

Step 601: A WLAN user terminal establishes a wireless connection with the WLAN access network in line with the WLAN specifications.

Step 602: The WLAN access network sends to the WLAN user terminal a user identity request signaling, EAP Request/Identity. The packaging protocol of the EAP content depends on the specific technical protocol adopted by the WLAN.

Step 603: The WLAN user terminal returns a user identity response message, EAP Response/Identity, which includes the identity of the WLAN user terminal itself. This identity adopts the Network Access Identity (NAI) defined in the IETF specification RFC 2486, which may be a temporary identity assigned in the last authentication, or a permanent identity IMSI. As the method for configuring a NAI format with IMSI has been defined in detail in EAP/AKA specification, no further description will be given here.

Step 604: Based on the domain name of NAI, the authentication request initiated by the WLAN user terminal is routed to an appropriate 3GPP AAA server. There may be one or more AAA proxy (omitted from the figure) in the route, and the route to the AAA server may be searched and determined by the Diameter referral method, or may be determined by the configuration data.

Step 605: The 3GPP AAA server receives the message of EAP Response/Identity containing the user identity. This message also contains the identity of the WLAN access network, VPLMN identity and the MAC address of the WLAN user terminal.

Step 606: Based on the identity received, the 3GPP AAA server regards that user as a candidate for EAP-AKA authentication. Then the 3GPP AAA server checks in itself whether there are authentication vectors of the user not yet used, if there is no authentication vectors not used, the AAA server will request HSS/HLR for the authentication vectors, for which a relationship table of corresponding temporary identity and IMSI is needed. Whether the 3GPP AAA server regards the current user as a candidate may comprise as well: the server obtaining authentication vectors not yet used before deciding in accordance with the obtained authentication vectors, for instance, the obtained UMTS authentication vectors whether to regard the user as a candidate for EAP-AKA authentication.

After HSS/HLR receives the request, if it is found by check that there has been another 3GPP AAA server registered as the serving AAA for the user and HSS/HLR confirms that the registered AAA server operates normally, HSS/HLR will then send to the 3GPP AAA server currently requesting for authentication vectors the address of the registered AAA server and the requesting server will transfer, as a PROXY or REDIRECTION agent, the authentication message to the registered 3GPP AAA server. After this step, the registered 3GPP AAA server will be regarded as the server providing service for the current user.

Step 607: The 3GPP AAA server sends an EAP Request/AKA Identity message to request the user identity again. This is because the intermediate nodes may change or replace the user identity received in the EAP Response/Identity message. However, if it is sure that the user identity in the EAP Response/Identity message is impossible to be changed; corresponding steps may be omitted by the home operator.

Steps 608-609: The WLAN access network forwards the EAP Request/AKA Identity message to the WLAN user terminal, which responses with a user identity completely same as that in the EAP Response/Identity message.

Step 610: The WLAN access network forwards the EAP Response/AKA Identity message to the 3GPP AAA server, which will make authentication using the user identity received in this message. If the user identity in EAP Response/Identity is not consistent with that in EAP Response/ AKA Identity, the subscription information and authentication vectors previously obtained from HSS/HLR is invalid and it is needed to make a new request. In other words, the procedure of requesting authentication vectors in step 606 needs to be performed again before going to step 611.

In order to optimize the procedure, if there is sufficient information in the 3GPP AAA server to identify a user as an EAP-AKA user, the procedure of requesting again for the identity should be carried out before the subscription information and authentication information of the user are obtained, although the above four steps are not to be carried out before the required subscription information of the user is downloaded to the 3GPP AAA server according to the protocol for Interface Wx.

Step 611: The 3GPP AAA server checks if it already has the user subscription information required for WLAN access, if not, the information should be obtained from HSS. Then the 3GPP AAA server checks whether the user is authorized to use the service of WLAN access.

Although this step is performed after step 606 in this embodiment, in practical applications it may be performed at any point before step 614.

Step 612: Derive new key information by intact key (IK) and C, which is specifically defined in the specifications. The key information is required by EAP-AKA and, obviously, it is possible to produce more key information for use in the security or integrity protection for WLAN access.

It is likely that a new pseudonym is selected and is protected with the key information produced by EAP-AKA.

Step 613: The 3GPP AAA server sends to the WLAN access network the following information in the EAP Request/AKA-Challenge message: RAND, AUTN, one Message Authentication Code (MAC) and two user identities (if there are), where the two identities refer to the pseudonym being protected and/or Re-authentication ID. Whether to send a Re-authentication ID depends on whether the operating rules of the 3GPP operator permit a re-authentication mechanism. In other words, at any time when the AAA server decides according to the operator's rules whether a Re-authentication ID is included, whether to permit a procedure of re-authentication to be carried out is accordingly determined.

Step 614: The WLAN access network sends the EAP Request/AKA-Challenge message to the WLAN user terminal.

Step 615: The WLAN user terminal performs the UMTS algorithm on USIM. USIM verifies whether AUTN is correct so as to authenticate the network. If AUTN is not correct, the WLAN user terminal will reject the authentication procedure. If the sequence number is not synchronized, the WLAN user terminal will initiate a synchronizing procedure. All is described in detail in the specification and will then not be further described here. If AUTN is correct, USIM will calculate to obtain RES, IK and Ciphering Key (CK).

The WLAN user terminal calculates to obtain other new key information based on the new IK and CK calculated by USIM and checks the obtained MAC using the new key information.

When received the protected pseudonym, the WLAN user terminal will save the pseudonym for use in later authentication.

Step 616: The WLAN user terminal calculates by means of new key information a new MAC value covering EAP messages, and sends to the WLAN access network the EAP Response/AKA-Challenge message which contains the calculated RES and the newly calculated MAC value.

Step 617: The WLAN access network forwards the EAP Response/AKA-Challenge message to the 3GPP AAA server.

Step 618: The 3GPP AAA server checks the obtained MAC and compares XRES with the obtained RES.

Step 619: If all the checks have passed, the 3GPP AAA will send an authentication success message EAP Success to the WLAN access network. In case some new keys are produced for the security and integrity protection of the WLAN access layer, the 3GPP AAA server will include the information of these keys in the messages of the AAA-layer protocol which bears that EAP information, that is, not include the information in the signaling of the EAP layer. The WLAN access network saves the keys for use in the communications with the WLAN user terminals which have passed authentication.

Step 620: The WLAN access network notifies the WLAN user terminal by the EAP Success message that the authentication has succeeded. At this time, the EAP-AKA interaction is successfully completed and both the WLAN user terminal and the access network have the shared key information produced in the interaction.

Step 621: The 3GPP AAA server compares the user's MAC address, VPLMN identity and the identity information of the WLAN access network in the authentication interaction with the appropriate information of corresponding users in the session currently in operation. If the information is all consistent with that in the operating session, the authentication procedure is considered to be associated with the WLAN session currently in operation and it is not needed to make any processing of the session.

In the above process, it is possible that the authentication fails at any stage, for instance, verification of MAC fails, or the WLAN user terminal gives no response after the network sends a request message, etc. In this case, the EAP-AKA procedure will be terminated and a message notifying the failure is sent to HSS/HLR.

Embodiment 5:

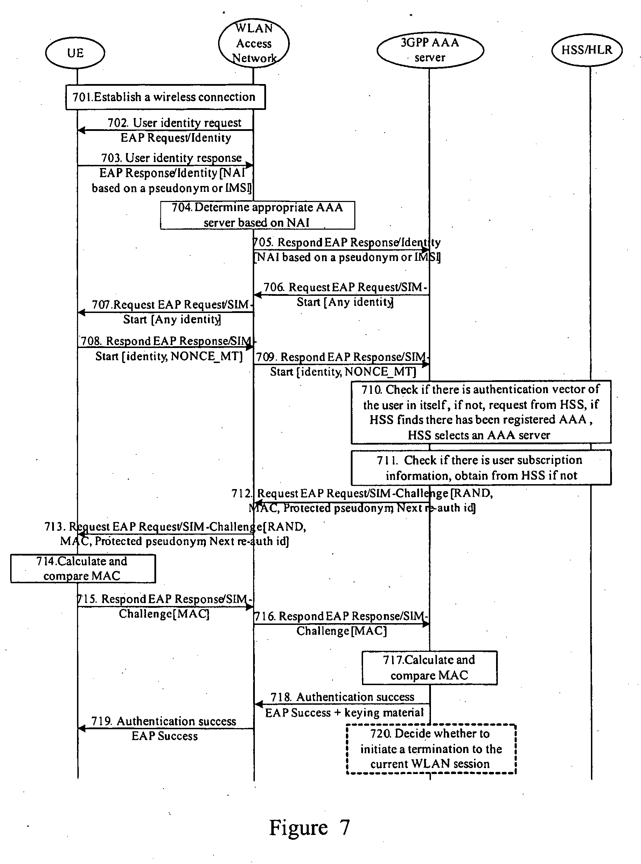

This embodiment is the application of this invented method in the WLAN authentication procedure of EAP-SIM. The primary procedure of EAP-SIM authentication is prescribed in detail in the specification. This embodiment mainly gives a description of how it is ensured that only one AAA server is used to provide service for a user when the authentication procedure is performed in a WLAN-3GPP inter-working network. As shown in Figure 7, the method embodied in this example comprises the steps of:

Step 701: A WLAN user terminal establishes a wireless connection with the WLAN access network in line with the WLAN specifications.

Step 702: The WLAN access network sends to the WLAN user terminal the user identity request signaling EAP Request/Identity. The packaging protocol of the EAP content depends on the specific technical protocol adopted by the WLAN.

Step 703: The WLAN user terminal returns a user identity response message EAP Response/Identity, which includes the identity of the WLAN user terminal itself. This identity adopts the Network Access Identity (NAI) defined in the IETF specification RFC 2486, which may be a temporary identity assigned in the last authentication, or a permanent identity IMSI. As the method for configuring an NAI format with IMSI has been defined in detail in EAP/AKA specifications, no further description will be given here.

Step 704: In accordance with the domain name of NAI, the authentication request initiated by the WLAN user terminal is routed to an appropriate 3GPP AAA server. There may be one or more AAA proxy (omitted from the figure) in the route, and the route to the AAA server may be searched and determined by the Diameter referral method, or may be determined by the configuration data.

Step 705: The 3GPP AAA server receives the message of EAP Response/Identity containing the user identity. This message also contains the identity of the WLAN access network, VPLMN identity and the MAC address of the WLAN user terminal.

Step 706: Based on the identity received, the 3GPP AAA server regards that user as a candidate for EAP-SIM authentication. Then the 3GPP AAA server sends EAP Request/SIM-Start to the WLAN access network and requests again for the user identity. This is because the intermediate nodes may change or replace the user identity received in the EAP Response/Identity message. However, if it is sure that the user identification in the EAP Response/Identity message is impossible to be changed; corresponding steps may be omitted by the operator of the home network. Whether the 3GPP AAA server regards the current user as a candidate may comprise as well: the server obtaining authentication vectors not yet used before deciding in accordance with the obtained authentication vectors, for instance, the obtained GSM Authentication Vectors whether to regard the user as a candidate for EAP-SIM authentication.

Steps 707-708: The WLAN access network sends the EAP Request/SIM-Start message to the WLAN user terminal. The WLAN user terminal selects a new random number NONCE_MT, which is used for network authentication, and responds with a user identity which is completely the same as that in the EAP Response/Identity message.

The EAP Response/SIM-Start message the WLAN user terminal sends to the WLAN access network contains NONCE_MT and the user identity.

Step 709: The WLAN access network sends the EAP Response/SIM-Start message to the 3GPP AAA server, which will make authentication using the user identity received in this message. If the user identity in EAP Response/Identity is not consistent with that in EAP Response/ SIM-Start, the user's subscription information and authentication vectors previously obtained from HSS/HLR is invalid and it is needed to make a new request.

Step 710: The 3GPP AAA server checks in itself whether there are N authentication vectors of the user not yet used. If yes, N GSM Authentication Vectors are used to produce a piece of key information with the same length as EAP-AKA; if there is not N authentication vectors, it is needed to obtain a set of authentication vectors from HSS/HLR, for which a relationship table of corresponding temporary identity and IMSI is needed.

After HSS/HLR receives the request, if it is found by check that there has been another 3GPP AAA server registered as the serving AAA for the user and HSS/HLR confirms that the registered AAA server operates normally, HSS/HLR will then send to the 3GPP AAA server currently requesting for authentication vectors the address of the registered AAA server and the requesting server will transfer, as a PROXY or REDIRECTION agent, the authentication message to the registered 3GPP AAA server. After this step, the registered 3GPP AAA server will be regarded as the server providing service for the current user.

Although this step is performed after step 709 in this embodiment, it may be performed at any point before step 712 in practical applications, for instance, after step 705.

Step 711: The 3GPP AAA server checks if it already has the user subscription information required for WLAN access, if not, the information should be obtained from HSS. Then the 3GPP AAA server checks whether the user is authorized to use the service of WLAN access.

Although this step is performed after step 710 in this embodiment, it may be performed at any point before step 718 in practical applications.

Step 712: Derive new key information by NONCE_MT and N Kc values, which is specifically defined in the specification. The key information is required by EAP-SIM and, obviously, it is possible to produce more key information for use in the security and integrity protection for WLAN access.

It is likely that a new pseudonym and/or Re-authentication ID is selected and is protected with the key information produced by EAP-SIM, for instance, it is encrypted and gets integrity protection.

An MAC can be calculated by covering the entire EAP message with the keys obtained in EAP-SIM for use in network authentication.

The 3GPP AAA server sends to the WLAN access network the following information in the EAP Request/SIM-Challenge message: RAND, AUTN, one Message Authentication Code (MAC) and two user identities (if there are), where the two identities refer to the pseudonym being protected and/or Re-authentication ID. Whether to send a Re-authentication ID depends on whether the operating rules of the 3GPP operator permit a re-authentication mechanism. In other words, at any time the AAA server decides according to the operator's rules whether a Re-authentication ID is included, whether to permit a procedure of re-authentication to be carried out will be accordingly decided.

Step 713: WLAN sends the EAP Request/SIM-Challenge message to the WLAN user terminal.

Step 714: The WLAN user terminal performs GSM A3/A8 algorithm in SIM for N number of times, one time for each RAND received, which produces N number of SRES values and Kc values.

The WLAN user terminal calculates to obtain other key information based on the N Kc keys and NONCE_MT.

The WLAN user terminal calculates an MAC for network authentication by means of the latest-obtained key information and check whether it is identical with the received MAC. If the MAC is incorrect, the network authentication fails and the WLAN user terminal cancels the authentication procedure. Only when the MAC is correct will the WLAN user terminal continue the authentication interaction.

The WLAN user terminal covers each EAP message associated with each of the N SRES responses with the new key and calculates a new MAC.

When received a protected pseudonym, the WLAN user terminal will save the pseudonym for use in later authentication.

Step 715: The WLAN user terminal sends the EAP Response/SIM-Challenge message containing the newly calculated MAC to the WLAN access network.

Step 716: The WLAN access network sends the EAP Response/SIM-Challenge message to the 3GPP AAA server.

Step 717: The 3GPP AAA server checks whether the obtained MAC is consistent with the one saved in itself.

Step 718: If all the checks have passed, the 3GPP AAA server will send an authentication success message EAP Success to the WLAN access network. In case some new keys are produced for the security and integrity protection of the WLAN access layer, the 3GPP AAA server will include the information of these keys in the messages of the AAA layer which bears that EAP information, that is, not include the information in the signaling of the EAP layer. The WLAN access network saves the keys for use in the communications with the WLAN user terminals which have passed authentication.

Step 719: The WLAN access network notifies the WLAN user terminal by the EAP Success message that the authentication has succeeded. At this time, the EAP-AKA interaction is successfully completed and both the WLAN user terminal and the access network have the shared key information produced in the interaction.

Step 720: The 3GPP AAA server compares the user's MAC address, VPLMN identity and the identity information of the WLAN access network in the authentication interaction with the appropriate information of corresponding users in the session currently in operation. If the information is all consistent with that in the operating session, the authentication procedure is considered to be associated with the WLAN session currently in operation and it is not needed to make any processing of the session.

If the MAC address or VPLMN identity or capacity information of the WLAN access network is different from that in the current WLAN session, the 3GPP AAA server will determine that this authentication is to create a new WLAN session. The 3GPP AAA server will then decide, based on whether the user is allowed for more than one WLAN sessions or whether the maximum number of WLAN session is over the limit, whether to initiate a termination to the current WLAN session.

In the above process, it is possible that the authentication fails at any stage, for instance, verification of MAC fails, or the WLAN user terminal gives no response after the network sends a request message, etc. In this case, the EAP-SIM procedure will be terminated and a message notifying the failure is sent to HSS/HLR.

The foregoing description is only preferred embodiments of this invention and is not to be construed as limits to the protection scope of the invention.

## Claims

1. An authentication method for use in wireless local area network, WLAN, when an authentication authorization accounting, AAA, server, upon receiving an authentication request from a WLAN user terminal (402, 502, 605, 705), sending a user information request to a home user information server (403, 404; 503, 504, 606, 710), **characterized by** comprising the steps of:
a. having received the user information request, the home user information server deciding whether there is an existing AAA server registered to serve the WLAN user terminal (405, 505, 606, 710), if it does not exists, returning user data of the WLAN user terminal to the AAA server requesting user information; if it exists, executing step b;
b. the home user information server selecting one AAA server to authenticate the WLAN user terminal (405, 406, 407; 505, 506, 507, 606, 710); and
c. if the AAA server sending the user information request is selected and the AAA server sending the user information request is not the same as the AAA server registered to serve the WLAN user terminal, the home user information server initiating a process of deleting the relevant information and connections of the WLAN user from other AAA servers associated with the WLAN user.

2. The method according to Claim 1, wherein the step b comprises: the home user information server deciding whether the AAA server registered to serve the WLAN user terminal is the AAA server requesting user information, if yes, selecting the AAA server requesting user information to authenticate the WLAN user terminal; otherwise, the home user information server selecting one AAA server to authenticate the WLAN user terminal.

3. The method according to Claim 1 or Claim 2, wherein the procedure of the home user information server selecting one AAA server comprises:
the home user information server providing the AAA server requesting WLAN user information with the address of the AAA server registered to serve the WLAN user terminal;
the AAA server requesting user information forwarding the authentication request to the AAA server registered to serve the WLAN user terminal, and the AAA server registered to serve the WLAN user terminal authenticating the WLAN user terminal.

4. The method according to Claim 1 or Claim 2, wherein the procedure of the home user information server selecting one AAA server comprises: the home user information server returning the user data of the WLAN user terminal to the AAA server requesting user information, and the AAA server requesting user information authenticating the WLAN user terminal.

5. The method according to Claim 3, further comprises in step b: the home user information server making periodical contacts with or negotiating with the AAA server registered to serve the WLAN user terminal before returning the address of the AAA server registered to serve the WLAN user terminal to the AAA server requesting user information.

6. The method according to Claim 3, wherein the procedure of the AAA server registered to serve the WLAN user terminal authenticating the WLAN user terminal further comprises: the AAA server requesting user information, as a proxy or a relay device, forwarding all the signaling between the WLAN user terminal and the AAA server registered to serve the WLAN user terminal.

7. The method according to Claim 3, wherein the AAA server requesting user information receives from a downstream node thereof the authentication request of the WLAN user terminal; the procedure of the AAA server registered to serve the WLAN user terminal authenticating the WLAN user terminal further comprises: the AAA server requesting user information transferring the address of the AAA server registered to serve the WLAN user terminal to the downstream node; the downstream node sending the authentication request to the AAA server registered to serve the WLAN user terminal.

8. The method according to Claim 4, wherein the home user information server selects the AAA server requesting the user information to authenticate the WLAN user terminal; the step b further comprises: after the authentication succeeding, the selected AAA server requesting for registration at the home user information server (508); the home user information server indicating the AAA server registered to serve the WLAN user terminal to delete the relevant information of the WLAN user terminal (509), deleting from itself the registration information of the AAA server registered to serve the WLAN user terminal (509), and registering the information of the selected AAA server.

9. The method according to Claim 1, wherein the user information comprises at least one of the subscription information of the WLAN user terminal and the authentication information of the WLAN user terminal.

10. The method according to Claim 1, wherein the home user information server is one of a home subscriber server, HSS, and the combination of a home location register, HLR, and an authentication center, AuC.

11. The method according to Claim 7, wherein the downstream node is one of an AAA proxy and a WLAN access network, AN.

12. A home user information server, **characterized by** comprising means adapted to
receive user information request from an AAA server,
decide whether there is an existing AAA server registered to serve a WLAN user terminal corresponding to the user information request;
return user data of the WLAN user terminal to the AAA server requesting user information if there is no existing AAA server registered; and
select one AAA server to authenticate the WLAN user terminal if there is the existing AAA server registered, and
if the AAA server sending the user information request is selected and the AAA server sending the user information request is not the same as the AAA server registered to serve the WLAN user terminal,
initiating a process of deleting the relevant information and connections of the WLAN user from other AAA servers associated with the WLAN user.

## Patentansprüche

1. Authentifizierungsverfahren zur Verwendung in einem drahtlosen lokalen Netz, WLAN, wenn ein Authentifizierungs-Autorisierungs-Kontoverwaltungs-Server, AAA-Server, beim Empfangen einer Authentifizierungsanforderung von einem WLAN-Anwenderendgerät (402, 502, 605, 705) eine Anwenderinformationsanforderung an einen Heimatanwenderinformationsserver (403, 404; 503, 504, 606, 710) sendet, **dadurch gekennzeichnet, dass** das Authentifizierungsverfahren die folgenden Schritte umfasst:
a. nachdem der Heimatanwenderinformationsserver die Anwenderinformationsanforderung empfangen hat, entscheidet er, ob es einen vorhandenen zum Bedienen des WLAN-Anwenderendgeräts (405, 505, 606, 710) registrierten AAA-Server gibt, falls es ihn nicht gibt, gibt er die Anwenderdaten des WLAN-Anwenderendgeräts an den AAA-Server, der Anwenderinformationen anfordert, zurück; falls es ihn gibt, wird Schritt b ausgeführt;
b. der Heimatanwenderinformationsserver wählt einen AAA-Server zum Authentifizieren des WLAN-Anwenderendgeräts (405, 406, 407; 505, 506, 507, 606, 710) aus; und
c. falls der AAA-Server, der die Anwenderinformationsanforderung sendet, ausgewählt wird und der AAA-Server, der die Anwenderinformationsanforderung sendet, nicht derselbe wie der zum Bedienen des WLAN-Anwenderendgeräts registrierte AAA-Server ist, initiiert der Heimatanwenderinformationsserver einen Prozess zum Löschen der relevanten Informationen und Verbindungen des WLAN-Anwenders von anderen dem WLAN-Anwender zugeordneten AAA-Servern.

2. Verfahren nach Anspruch 1, wobei der Schritt b Folgendes umfasst: der Heimatanwenderinformationsserver entscheidet, ob der zum Bedienen des WLAN-Anwenderendgeräts registrierte AAA-Server der AAA-Server ist, der Anwenderinformationen anfordert, wenn ja, wählt er den AAA-Server, der Anwenderinformationen anfordert, zum Authentifizieren des WLAN-Anwenderendgeräts aus; andernfalls wählt der Heimatanwenderinformationsserver einen AAA-Server zum Authentifizieren des WLAN-Anwenderendgeräts aus.

3. Verfahren nach Anspruch 1 oder Anspruch 2, wobei die Prozedur, dass der Heimatanwenderinformationsserver einen AAA-Server auswählt, Folgendes umfasst:
der Heimatanwenderinformationsserver stellt für den AAA-Server, der WLAN-Anwenderinformationen anfordert, die Adresse des zum Bedienen des WLAN-Anwenderendgeräts registrierten AAA-Servers bereit;
der AAA-Server, der Anwenderinformationen anfordert, leitet die Authentifizierungsanforderung an den zum Bedienen des WLAN-Anwenderendgeräts registrierten AAA-Server weiter und der zum Bedienen des WLAN-Anwenderendgeräts registrierte AAA-Server authentifiziert das WLAN-Anwenderendgerät.

4. Verfahren nach Anspruch 1 oder Anspruch 2, wobei die Prozedur, dass der Heimatanwenderinformationsserver einen AAA-Server auswählt, Folgendes umfasst:
der Heimatanwenderinformationsserver, der die Anwenderdaten des WLAN-Anwenderendgeräts an den AAA-Server zurückgibt, fordert Anwenderinformationen an und der AAA-Server, der Anwenderinformationen anfordert, authentifiziert das WLAN-Anwenderendgerät.

5. Verfahren nach Anspruch 3, das in Schritt b ferner Folgendes umfasst: der Heimatanwenderinformationsserver stellt periodische Kontakte zu dem zum Bedienen des WLAN-Anwenderendgeräts registrierten AAA-Server her oder verhandelt mit ihm, bevor er die Adresse des zum Bedienen des WLAN-Anwenderendgeräts registrierten AAA-Servers an den AAA-Server, der Anwenderinformationen anfordert, zurückgibt.

6. Verfahren nach Anspruch 3, wobei die Prozedur, dass der zum Bedienen des WLAN-Anwenderendgeräts registrierte AAA-Server das WLAN-Anwenderendgerät authentifiziert, ferner Folgendes umfasst: der AAA-Server, der Anwenderinformationen anfordert, leitet die gesamte Signalisierung zwischen dem WLAN-Anwenderendgerät und dem zum Bedienen des WLAN-Anwenderendgeräts registrierten AAA-Server als ein Proxy oder als eine Weiterleitungsvorrichtung weiter.

7. Verfahren nach Anspruch 3, wobei der AAA-Server, der Anwenderinformationen anfordert, von einem nachgeschalteten Knoten davon die Authentifizierungsanforderung des WLAN-Anwenderendgeräts empfängt; wobei die Prozedur, dass der zum Bedienen des WLAN-Anwenderendgeräts registrierte AAA-Server das WLAN-Anwenderendgerät authentifiziert, ferner Folgendes umfasst: der AAA-Server, der Anwenderinformationen anfordert, überträgt die Adresse des zum Bedienen des WLAN-Anwenderendgeräts registrierten AAA-Servers an den nachgeschalteten Knoten; der nachgeschaltete Knoten sendet die Authentisierungsforderung an den zum Bedienen des WLAN-Anwenderendgeräts registrierten AAA-Server.

8. Verfahren nach Anspruch 4, wobei der Heimatanwenderinformationsserver den AAA-Server, der die Anwenderinformationen anfordert, zum Authentifizieren des WLAN-Anwenderendgeräts auswählt; wobei der Schritt b ferner Folgendes umfasst:
Nachdem die Authentifizierung erfolgreich war, fordert der ausgewählte AAA-Server die Registrierung bei dem Heimatanwenderinformationsserver (508) an; der Heimatanwenderinformationsserver gibt den zum Bedienen des WLAN-Anwenderendgeräts registrierten AAA-Server zum Löschen der relevanten Informationen des WLAN-Anwenderendgeräts (509), zum Löschen der Registrierungsinformationen des zum Bedienen des WLAN-Anwenderendgeräts (509) registrierten AAA-Servers von sich selbst und zum Registrieren der Informationen des ausgewählten AAA-Servers an.

9. Verfahren nach Anspruch 1, wobei die Anwenderinformationen die Abonnementinformationen des WLAN-Anwenderendgeräts und/oder die Authentifizierungsinformationen des WLAN-Anwenderendgeräts umfassen.

10. Verfahren nach Anspruch 1, wobei der Heimatanwenderinformationsserver ein Heimatabonnentenserver, HSS, oder die Kombination eines Heimatortsregisters, HLR, und eines Authentifizierungszentrums, AuC, ist.

11. Verfahren nach Anspruch 7, wobei der nachgeschaltete Knoten ein AAA-Proxy oder ein WLAN-Zugangsnetz, AN, ist.

12. Heimatanwenderinformationsserver, **dadurch gekennzeichnet, dass** er Mittel umfasst, die für Folgendes ausgelegt sind:
Empfangen einer Anwenderinformationsanforderung von einem AAA-Server, Entscheiden, ob es einen vorhandenen der Anwenderinformationsanforderung entsprechenden zum Bedienen eines WLAN-Anwenderendgeräts registrierten AAA-Server gibt;
Zurückgeben von Anwenderdaten des WLAN-Anwenderendgeräts an den AAA-Server, der Anwenderinformationen anfordert, falls kein vorhandener AAA-Server registriert ist; und
Auswählen eines AAA-Servers zum Authentifizieren des WLAN-Anwenderendgeräts, falls der vorhandene AAA-Server registriert ist, und
falls der AAA-Server, der die Anwenderinformationsanforderung sendet, ausgewählt wird und der AAA-Server, der die Anwenderinformationsanforderung sendet, nicht derselbe wie der zum Bedienen des WLAN-Anwenderendgeräts registrierte AAA-Server ist, Initiieren eines Prozesses zum Löschen der relevanten Informationen und
Verbindungen des WLAN-Anwenders von anderen dem WLAN-Anwender zugeordneten AAA-Servern.

## Revendications

1. Procédé d'authentification à utiliser dans un réseau local sans fil, WLAN, lorsqu'un serveur d'authentification, autorisation et comptabilisation, AAA, lors de la réception d'une demande d'authentification provenant d'un terminal utilisateur de réseau WLAN (402, 502, 605, 705), envoyant une demande d'informations utilisateur à un serveur d'informations d'utilisateur domestique (403, 404 ; 503, 504, 606, 710), est caractérisé comme comprenant les étapes consistant en ce que :
a. le serveur d'informations d'utilisateur domestique, décide, lorsqu'il a reçu la demande d'informations utilisateur, s'il existe un serveur AAA enregistré pour desservir le terminal utilisateur de réseau WLAN (405, 505, 606, 710) ; s'il n'existe pas, il renvoie les données utilisateur du terminal utilisateur de réseau WLAN au serveur AAA demandant des informations utilisateur ; s'il existe, il exécute l'étape b,
b. le serveur d'informations d'utilisateur domestique sélectionne un serveur AAA pour authentifier le terminal utilisateur de réseau WLAN (405, 406, 407 ; 505, 506, 507, 606, 710), et
c. si le serveur AAA envoyant la demande d'informations utilisateur est sélectionné et que le serveur AAA envoyant la demande d'informations utilisateur n'est pas identique au serveur AAA enregistré pour desservir le terminal utilisateur de réseau WLAN, le serveur d'informations d'utilisateur domestique lance un traitement consistant à supprimer les informations pertinentes et les connexions de l'utilisateur du réseau WLAN d'autres serveurs AAA qui sont associés à l'utilisateur du réseau WLAN.

2. Procédé selon la revendication 1, dans lequel l'étape b comprend le fait que le serveur d'informations d'utilisateur domestique décide si le serveur AAA, enregistré pour desservir le terminal utilisateur de réseau WLAN, est le serveur AAA demandant des informations utilisateur ; si c'est le cas il sélectionne le serveur AAA demandant les informations utilisateur pour authentifier le terminal utilisateur de réseau WLAN ; sinon, le serveur des informations d'utilisateur domestique sélectionne un serveur AAA pour authentifier le terminal utilisateur de réseau WLAN.

3. Procédé selon la revendication 1 ou la revendication 2, dans lequel la procédure dans laquelle le serveur d'informations d'utilisateur domestique sélectionne un serveur AAA comprend les étapes suivantes :
le serveur d'informations d'utilisateur domestique procure au serveur AAA demandant des informations utilisateur de réseau WLAN l'adresse du serveur AAA enregistré pour desservir le terminal utilisateur de réseau WLAN,
le serveur AAA demandant des informations utilisateur transfère la demande d'authentification au serveur AAA enregistré pour desservir le terminal utilisateur de réseau WLAN, et le serveur AAA enregistré pour desservir le terminal utilisateur de réseau WLAN authentifie le terminal utilisateur de réseau WLAN.

4. Procédé selon la revendication 1 ou la revendication 2, dans lequel la procédure où le serveur d'informations d'utilisateur domestique sélectionne un serveur AAA comprend le fait que le serveur d'informations d'utilisateur domestique renvoie les données utilisateur du terminal utilisateur de réseau WLAN au serveur AAA demandant des informations utilisateur, et le serveur AAA demandant des informations utilisateur authentifie le terminal utilisateur de réseau WLAN.

5. Procédé selon la revendication 3, comprenant en outre dans l'étape b le fait que le serveur d'informations d'utilisateur domestique effectue des contacts périodiques ou bien négocie avec le serveur AAA enregistré pour desservir le terminal utilisateur de réseau WLAN avant de renvoyer l'adresse du serveur AAA enregistré pour desservir le terminal utilisateur de réseau WLAN au serveur AAA demandant des informations utilisateur.

6. Procédé selon la revendication 3, dans lequel la procédure où le serveur AAA enregistré pour desservir le terminal utilisateur, de réseau WLAN authentifie le terminal utilisateur de réseau WLAN comprend en outre le fait que le serveur AAA demande des informations utilisateur, comme un serveur mandataire ou comme un dispositif de relayage, propageant toute la signalisation entre le terminal utilisateur de réseau WLAN et le serveur AAA enregistré pour desservir le terminal utilisateur de réseau WLAN.

7. Procédé selon la revendication 3, dans lequel le serveur AAA demandant des informations utilisateur reçoit en provenance d'un noeud en aval de celui-ci la demande d'authentification du terminal utilisateur de réseau WLAN ; la procédure où le serveur AAA enregistré pour desservir le terminal utilisateur de réseau WLAN en authentifiant le terminal utilisateur de réseau WLAN comprend en outre le fait que le serveur AAA demandant des informations utilisateur transfère vers le noeud en aval l'adresse du serveur AAA enregistré pour desservir le terminal utilisateur de réseau WLAN ; le noeud en aval envoyant la demande d'authentification au serveur AAA enregistré pour desservir le terminal utilisateur de réseau WLAN.

8. Procédé selon la revendication 4, dans lequel le serveur d'informations d'utilisateur domestique sélectionne le serveur AAA demandant les informations utilisateur pour authentifier le terminal utilisateur de réseau WLAN, l'étape b comprenant en outre les faits suivants : après la réussite de l'authentification, le serveur AAA sélectionné demande l'enregistrement au serveur d'informations d'utilisateur domestique (508) ; le serveur d'informations d'utilisateur domestique indique au serveur AAA enregistré pour desservir le terminal utilisateur de réseau WLAN de supprimer les informations pertinentes du terminal utilisateur de réseau WLAN (509), il supprime en lui-même les informations d'enregistrement du serveur AAA enregistré pour desservir le terminal utilisateur de réseau WLAN (509) et il enregistre les informations du serveur AAA sélectionné.

9. Procédé selon la revendication 1, dans lequel les informations utilisateur comprennent au moins des informations de souscription du terminal utilisateur de réseau WLAN et/ou des informations d'authentification du terminal utilisateur de réseau WLAN.

10. Procédé selon la revendication 1, dans lequel le serveur d'informations d'utilisateur domestique est l'un d'un serveur d'abonnés domestiques, HSS, et de la combinaison d'un registre de localisation nominal, HLR, et d'un centre d'authentification, AuC.

11. Procédé selon la revendication 7, dans lequel le noeud en aval est l'un d'un serveur mandataire AAA et d'un réseau d'accès, AN, à un réseau WLAN.

12. Serveur d'informations d'utilisateur domestique, **caractérisé en ce qu'**il comprend un moyen conçu pour
recevoir une demande d'informations utilisateur provenant d'un serveur AAA, décider s'il existe un serveur AAA enregistré pour desservir un terminal utilisateur de réseau WLAN correspondant à la demande d'informations utilisateur,
renvoyer des données utilisateur du terminal utilisateur de réseau WLAN au serveur AAA demandant des informations utilisateur s'il n'existe pas de serveur AAA enregistré, et
sélectionner un serveur AAA pour authentifier le terminal utilisateur de réseau WLAN s'il existe un serveur AAA enregistré, et
si le serveur AAA envoyant la demande d'informations utilisateur est sélectionné et que le serveur AAA envoyant la demande d'informations utilisateur n'est pas identique au serveur AAA enregistré pour desservir le terminal utilisateur de réseau WLAN, lancer un traitement de suppression des informations pertinentes et des connexions de l'utilisateur du réseau WLAN d'autres serveurs AAA qui sont associés à l'utilisateur du réseau WLAN.
